**Europäisches Patentamt**

**European Patent Office**

**Office européen des brevets**

(19)

(11) Veröffentlichungsnummer : **0 187 889**
**B1**

(12)
# EUROPÄISCHE PATENTSCHRIFT

(45) Veröffentlichungstag der Patentschrift :
**09.11.88**

(51) Int. Cl.⁴ : **B 65 G 33/16**

(21) Anmeldenummer : **85104610.2**

(22) Anmeldetag : **16.04.85**

(54) **Schneckenfördervorrichtung.**

(30) Priorität : **16.01.85 DE 3501259**

(43) Veröffentlichungstag der Anmeldung :
**23.07.86 Patentblatt 86/30**

(45) Bekanntmachung des Hinweises auf die Patenterteilung : **09.11.88 Patentblatt 88/45**

(84) Benannte Vertragsstaaten :
**AT BE CH DE FR GB IT LI NL SE**

(56) Entgegenhaltungen :
**CH-A-  521 908**
**DE-A- 2 355 414**
**FR-A- 2 493 281**
**GB-A- 1 282 959**
**GB-A- 1 580 420**

(73) Patentinhaber : **Industrie-Technik Erich A. Hinder-**
**mann Aktiengesellschaft für Rationalisierung und**
**Verfahrenstechnik**
**Sagirain 2**
**CH-6403 Küssnacht a. Rigi (CH)**

(72) Erfinder : **Hindermann, Erich A.**
**Sagirain, 2**
**CH-6403 Küssnacht a.R. (CH)**

(74) Vertreter : **Gille, Christian, Dipl.-Ing. et al**
**Türk, Gille + Hrabal Patentanwälte Bruckner Strasse**
**20**
**D-4000 Düsseldorf 13 (DE)**

## Beschreibung

Die Erfindung betrifft eine Schneckenfördervorrichtung für schüttfähiges Material, mit einem rohr- oder schlauchförmigen Gehäuse, das nahe dem einen Ende eine Aufgabeöffnung und nahe dem anderen Ende eine Abgabeöffnung für das geförderte Material aufweist, mit einer sich durch das Gehäuse erstreckenden biegsamen und drehbar gelagerten Welle, mit wenigstens einer den Kern umgebenden antreibbaren Förderwendel aus Draht- oder Bandmaterial und mit einem an das eine Ende des Gehäuses angeschlossenen Antriebsmotor zum Antreiben der Welle gemeinsam mit oder relativ zu den Förderwendeln.

Aus CH-A-521 908 ist eine Schneckenfördervorrichtung der vorstehend genannten Art bekannt. Hierbei sind aus starrem Material bestehende Halter für die Förderwendel an den Enden der biegsamen Welle vorgesehen, wie dies auch DE-A-2 355 414 beschreibt. Diese starren Halter sind nicht nur verschleißanfällig, sondern es können auch Überbeanspruchungen auftreten, wobei sich insbesondere Schwierigkeiten hinsichtlich der Übertragung hoher Drehmomente ergeben.

Aus DE-A-2 355 414 und GB-A-1 580 420 sind geeignete Materialien für die federnden oder biegsamen Elemente bekannt, bei denen es sich beispielsweise um Draht- oder Bandmaterialien handeln kann, deren Querschnitte kreisförmig oder rechteckig ausgelegt sind.

Aus FR-A1-2 493 281 ist eine Schneckenfördervorrichtung bekannt, die eine Förderwendel hat, die bürstenähnlich ausgebildete Teile umfaßt, die wendelförmig an einer biegsamen und drehbar gelagerten Welle angebracht ist. Mit dieser Schneckenfördervorrichtung kann nur spezielles Gut, wie brechbares Korngut, Fasern u. dgl. gefördert werden, und die Förderwendel ist auch speziell auf diese Anwendungsfälle abgestimmt.

Aus GB-A-1 282 959 ist eine Schneckenfördervorrichtung für schüttfähiges Material bekannt, die eine starre Förderschnecke aufweist. Diese Fördervorrichtung hat zwar ein gutes Förderverhalten, ist jedoch nur für einen mehr oder weniger horizontalen und lediglich für geradlinigen Transport geeignet.

Auch gibt es Schneckenfördervorrichtungen, bei denen die innenliegende Welle feststehend im Gehäuse angeordnet ist, während die Förderwendel drehbar und antreibbar ist. Im Betrieb tritt zwischen der relativ schnell laufenden Förderwendel und der feststehenden Welle ein Verschleiß an der Förderwendel und der Welle auf, was zu übermäßigen Beanspruchungen und somit zu Beschädigungen des geförderten Materials führen kann.

Auch gibt es Schneckenfördervorrichtungen, die ein oder zwei konzentrisch zueinander angeordnete antreibbare Förderwendeln aufweisen, bei denen der zentrale Teil freibleibt. Hierbei ergibt sich vielfach der Nachteil, daß insbesondere bei grossen Längen der Fördervorrichtung und/oder bei hohem Schüttgewicht des Fördergutes die erforderlichen hohen Drehmomente und Längskräfte nur bedingt übertragen werden können. Die Förderwendeln können sich daher in manchen Anwendungsfällen, wie bei schwer fließenden, feuchten Produkten, nicht mehr drehen und bei Überschreitung der zulässigen Festigkeitswerte brechen. Bei bestimmten schwierig zu fördernden Fördergütern ist eine relativ hohe Drehzahl erforderlich, wenn verhindert werden soll, daß durch die zentrale Öffnung der Förderwendel zu viel Material zurückgeht. Hohe Drehzahlen führen aber besonders bei gekrümmt geführten Schnecken oder Vorrichtungen zu Schwingungen der Förderwendeln, insbesondere bei ungenügendem Füllungsgrad der Fördervorrichtung.

Der Erfindung liegt die Aufgabe zugrunde, unter Überwindung der zuvor geschilderten Nachteile eine Schneckenfördervorrichtung der vorstehend genannten Art bereitzustellen, mit der problemlos hohe Drehmomente übertragen werden können, und die ein ähnliches Förderverhalten wie eine Fördervorrichtung mit starrer Förderschnecke hat.

Nach der Erfindung wird diese Aufgabe bei einer Schneckenfördervorrichtung für schüttfähiges Material mit den Merkmalen des Oberbegriffs dadurch gelöst, daß auf der biegsamen Welle wenigstens an den beiden Enden aus elastischem Material bestehende Halter als Auflagen für die Förderwendel angeordnet sind. Hierbei erhält man eine elastische Lagerung der Förderwendeln wenigstens an den Enden der Welle, so daß Relativbewegungen zwischen der Förderwendel und der Welle möglich sind, ohne daß ein zu starker Verschleiß oder gar ein Bruch zu befürchten ist. Selbst hohe Drehmomente lassen sich bei einer solchen Auslegung der Schneckenfördervorrichtung übertragen und man erhält ein ähnliches Förderverhalten wie bei den üblichen starren Förderschnecken. Schließlich werden auch Schäden am Fördergut vermieden. Selbst feuchte Materialien lassen sich ohne Schwierigkeiten und ohne Abrieb fördern. Durch die aus elastischem Material bestehenden Halter werden auch Schwingungen gedämpft, so daß das Schwingungsverhalten der Förderwendeln, insbesondere bei ungenügendem Füllungsgrad der Fördervorrichtung, wesentlich verbessert wird.

Weitere vorteilhafte Ausgestaltungen nach der Erfindung sind in den Ansprüchen 2 bis 7 wiedergegeben.

Die Erfindung wird nachstehend anhand von Beispielen unter Bezugnahme auf die beigefügte Zeichnung näher erläutert.

Darin zeigt :

Fig. 1 eine Teillängsschnittansicht einer Schneckenfördervorrichtung, bei der eine Förderwendel ohne Spiel auf einer biegsamen Welle vorgesehen ist,

Fig. 2 ein Ende der biegsamen Welle mit der Fördervorrichtung nach Fig. 1, wobei die aus Draht mit kreisförmigem Querschnitt bestehende einzige Förderwendel spielfrei auf der biegsamen Welle aufliegt,

Fig. 3 eine Fig. 2 ähnliche Ansicht, wobei jedoch um die biegsame Welle zwei aus Draht mit kreisförmigem Querschnitt bestehende Förderwendel konzentrisch zueinander angeordnet sind,

Fig. 4 einen Teillängsschnitt einer Schneckenfördervorrichtung ähnlich wie in Fig. 1, wobei jedoch auf der biegsamen Welle eine Förderwendel mit Spiel bzw. radialem Abstand angeordnet ist,

Fig. 5 eine Ansicht des Endes der biegsamen Welle der Fördervorrichtung aus Fig. 4, woraus zu ersehen ist, wie die eine Förderwendel mit Spiel auf der biegsamen Welle gehalten ist,

Fig. 6 eine Ansicht wie in Fig. 5, wobei jedoch zwei aus Draht mit kreisförmigem Querschnitt bestehende Förderwendeln konzentrisch und jeweils mit Spiel auf der biegsamen Welle angeordnet sind, und

Fig. 7 eine im Maßstab vergrößerte Teilansicht einer biegsamen Welle, die zwischen ihren Enden ein Abstandselement trägt, auf dem eine die biegsame Welle im wesentlichen mit Spiel umgebende Förderwendel zwischen den Enden derselben aufliegt.

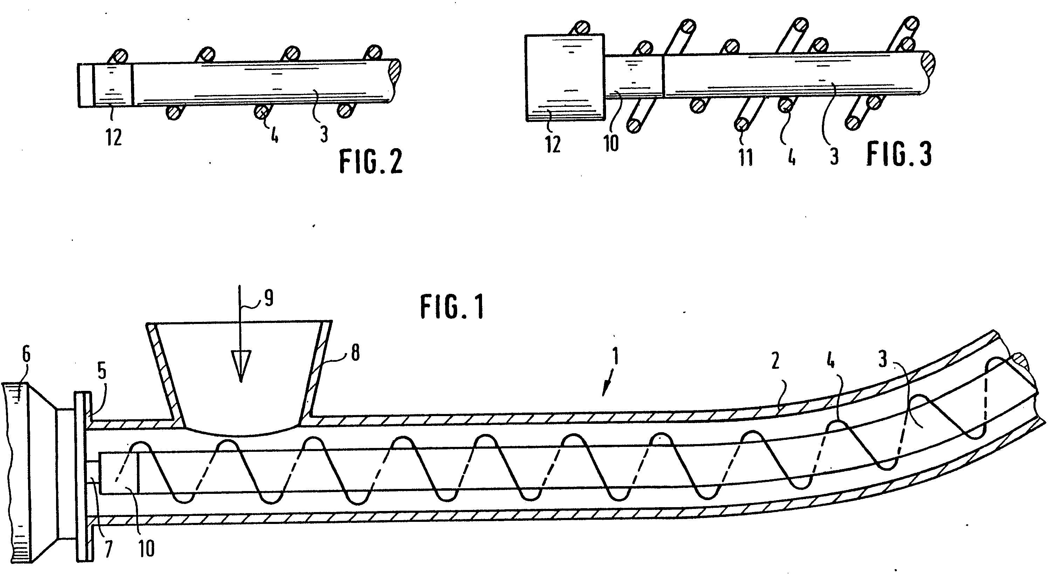

Eine in Fig. 1 dargestellte Schneckenfördervorrichtung 1 enthält in einem schlauchförmigen biegsamen bzw. flexiblen Gehäuse 2 eine biegsame Welle 3, auf der spielfrei eine aus Drahtmaterial bestehende Förderwendel 4 aufliegt. Das Drahtmaterial der Förderwendel 4 kann kreisförmigen oder auch rechteckigen Querschnitt mit abgerundeten Ecken aufweisen, d. h. die Förderwendel 4 kann sowohl aus Drahtmaterial als auch aus Bandmaterial bestehen. Dabei besteht die Förderwendel aus federndem und korrosionsbeständigem Material, vorzugsweise aus Federstahl, Edelstahl, Bronze, federelastischem Kunststoff oder glas- oder kohlefaserverstärktem Material. Die biegsame Welle 3 besteht zweckmäßig aus Stahl, Edelstahl oder federelastischem Kunststoff.

An das in Fig. 1 sichtbare Stirnende 5 des Gehäuses 2 ist ein Antriebsmotor 6 angeflanscht, an dessen Abtriebswelle 7 die biegsame Welle 3 angeschlossen ist. Je nach Drehrichtung des Antriebsmotors 6 arbeitet die biegsame Welle 3 mit darauf angebrachter Förderwendel 4 entweder ziehend oder stauend, so daß das zu fördernde Material entweder durch das Gehäuse 2 hindurchgezogen oder hindurchgeschoben wird.

Nahe dem Stirnende 5 ist am Gehäuse 2 ein radial in dieses mündender Trichter 8 angebracht, der, wie durch den Pfeil 9 angedeutet, als Aufgabetrichter benutzt werden kann. In diesem Falle wird die Welle 3 vom Antriebsmotor 6 derart gedreht, daß das zu fördernde Material stauend durch das Gehäuse 2 hindurchgeschoben wird. Bei entsprechender anderer Anordnung des Trichters 8 könnte dieser auch als Abgabeöffnung benutzt werden. In diesem Falle müßte die Welle 3 in entgegengesetzter Drehrichtung angetrieben werden, so daß das zu fördernde Gut dann ziehend durch das Gehäuse 2 hindurchgefördert wird.

Aus Fig. 2 ist zu erkennen, daß die Förderwendel 4 an einem Kopfstück 10 der Welle 3 drehfest mit dieser verbunden ist, aber auch praktisch spielfrei auf der gesamten Länge der Welle 3 aufliegt, so daß Relativbewegungen nur in dem Ausmaße möglich sind, wie durch die Biegungen notwendig werden. Schwingungen der Förderwendel 4 gegenüber der biegsamen Welle 3 werden dadurch mit Sicherheit unterbunden.

Aus Fig. 3 ist zu erkennen, daß eine weitere Förderwendel 11 konzentrisch um die Welle 3 und die spielfrei auf dieser sitzende Förderwendel 4 angeordnet ist. Diese äußere Förderwendel 11 ist an einem einen erweiterten Durchmesser aufweisenden zusätzlichen Kopfstück 12 der biegsamen Welle 3 befestigt. Ein weiteres Kopfstück dieser Art ist am entgegengesetzten Ende der biegsamen Welle 3 vorgesehen. Außerdem können ringförmige oder ähnliche Abstandhalter für die äußere Förderwendel 11 zwischen den Enden der biegsamen Welle 3 auf dieser angebracht sein, um Schwingungen auch der äußeren Förderwendel gegenüber der biegsamen Welle 3 weitgehend auszuschalten.

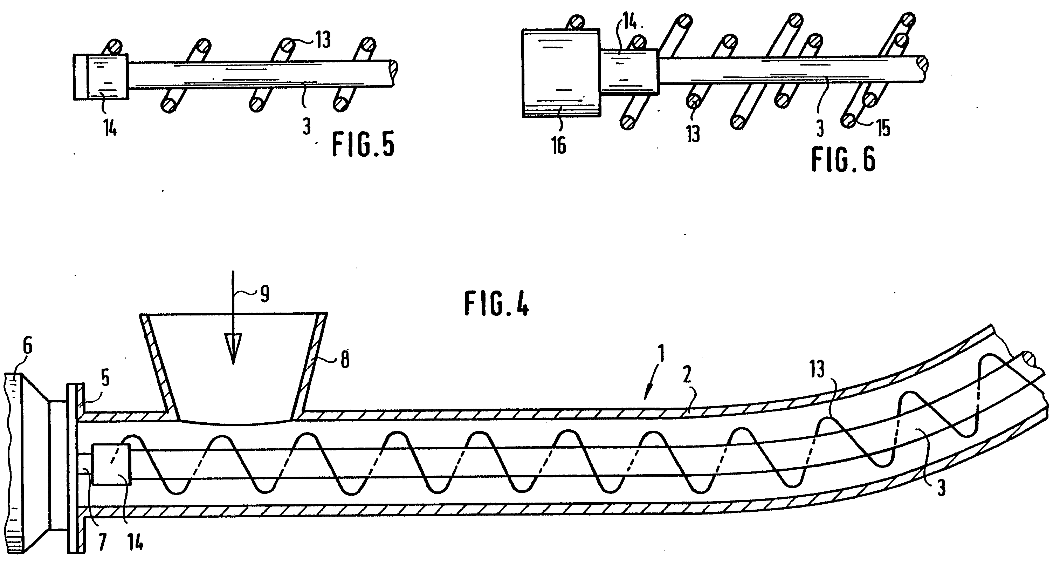

Bei der in Fig. 4 dargestellten Schneckenfördervorrichtung 1 ist auf der biegsamen Welle 3 eine Förderwendel 13 angeordnet, welche die biegsame Welle 3 mit radialem Spiel umgibt, wie insbesondere Fig. 5 zeigt. Die biegsame Welle 3 ist daher an ihren beiden Enden jeweils mit einem einen größeren Außendurchmesser aufweisenden Kopf 14 versehen, auf denen die Enden der Förderwendel 13 befestigt sind. Im übrigen arbeitet die Fördervorrichtung aus Fig. 4 in gleicher Weise wie die Fördervorrichtung aus Fig. 1.

Fig. 6 zeigt, daß um die Förderwendel 13 herum eine weitere Förderwendel 15 konzentrisch angeordnet ist, die einen derartigen Durchmesser hat, daß sie über die Förderwendel 13 paßt. Die biegsame Welle 3 ist bei dieser Ausführungsform an ihren Enden mit einem zusätzlichen und nochmals erweiterten Kopf 16 versehen, auf dem die Enden der äußeren Förderwendel 15 befestigt sind.

Die Köpfe 10, 12, 14 und 16 können drehfest mit der entsprechenden biegsamen Welle 3 verbunden sein, aber auch zu dieser relativ drehbar gelagert sein. Bei dieser letztgenannten Ausführungsform lassen sich die Förderwendeln relativ zur biegsamen Welle 3 verdrehen, was insbesondere dann zweckmäßig sein kann, wenn die Förderwendeln 11, 13 und 15 mit radialem Spiel um die biegsame Welle 3 herum angeordnet sind.

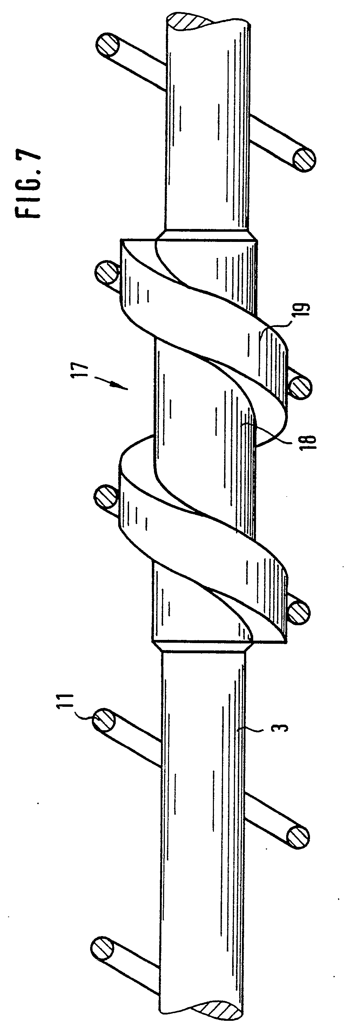

Fig. 7 zeigt, daß die biegsame Welle 3 zwischen ihren Enden mit wenigstens einem Abstandhalter 17 versehen sein kann, der als Auflage, beispielsweise für die äußeren Förderwendel 11 der Ausführungsform gemäß Fig. 3, dient, um die äußere Förderwendel 11 auch zwischen deren Enden auf der Welle 3 abzustützen. Bei der Ausführungsform gemäß Fig. 7 besteht der Abstandhalter 17 aus einem im Durchmesser erweiterten zylindrischen Grundkörper 18 und einem auf diesem angebrachten wendelförmigen Steg 19, auf dem die Förderwendel 11 mit zwei Windungen aufliegt. Der Abstandhalter 17 und insbesondere dessen Steg 19 besteht aus elastischem Material, so daß durch Reibungsschluß eine drehfeste Verbindung zwischen der Förderwendel 11 und dem Abstandhalter 17 bzw. der biegsamen Welle 3 herbeigeführt wird.

Der zylindrische Grundkörper 18 dient zur Auflage der hier nicht gezeigten, die biegsame Welle 3 ebenfalls mit radialem Spiel umgebenden inneren Förderwendel 13. Liegt auf der biegsamen Welle 3 eine Förderwendel 4 spielfrei auf, kann der hülsenförmig auf der biegsamen Welle 3 angebrachte zylindrische Grundkörper 18 ganz entfallen, so daß der wendelförmige Steg 19 unmittelbar auf der Welle 3 sitzt.

Der radiale Abstand zwischen der biegsamen Welle 3 und den diese mit radialem Spiel umgebenden Förderwendeln 11, 13 und 15 und ebenso der radiale Abstand zwischen den konzentrisch zueinander um die biegsame Welle 3 herum angeordneten Förderwendeln orientiert sich zweckmäßig an der Korngröße des zu fördernden Materials, um zu starke Beanspruchungen dieses Materials und damit Beschädigung desselben zu vermeiden.

Für die drehfeste Verbindung zwischen dem Antriebsmotor und der bzw. den Förderwendel(n) und/oder der biegsamen Welle bzw. den biegsamen Wellen ist eine nicht dargestellte Kupplung vorgesehen, beispielsweise ein Vierkant, ein Sechskant oder auch eine Keilnabe.

**Patentansprüche**

1. Schneckenfördervorrichtung für schüttfähiges Material, mit einem rohr- oder schlauchförmigen Gehäuse (2), das nahe dem einen Ende eine Aufgabeöffnung (8) und nahe dem anderen Ende eine Abgabeöffnung für das geförderte Material aufweist, mit einer sich durch das Gehäuse (2) erstreckenden biegsamen und drehbar gelagerten Welle (3), mit wenigstens einer die Welle (3) umgebenden antreibbaren Förderwendel (4, 11, 13, 15) aus Draht oder Bandmaterial und mit einem an das eine Ende des Gehäuses angeschlossenen Antriebsmotor (6) zum Antreiben der Welle (3) gemeinsam mit oder relativ zu den Förderwendeln (4, 11, 13, 15), dadurch gekennzeichnet, daß auf der biegsamen Welle (3) wenigstens an deren beiden Enden aus elastischem Material bestehende Halter (10, 12, 14, 16, 17) als Auflagen für die Förderwendeln (4, 11, 13, 15) angeordnet sind.

2. Vorrichtung nach Anspruch 1, dadurch gekennzeichnet, daß die biegsame Welle (3) getrennt von den Förderwendeln (4, 11, 13, 15) an den Antriebsmotor (6) angekuppelt ist.

3. Vorrichtung nach Anspruch 1 oder 2, dadurch gekennzeichnet, daß eine aus Drahtmaterial bestehende Förderwendel (4) spielfrei auf der biegsamen Welle (3) aufliegt.

4. Vorrichtung nach Anspruch 1 oder 2, dadurch gekennzeichnet, daß die Förderwendeln (4, 11, 13, 15) aus einen kreisförmigen oder einen rechteckigen Querschnitt mit abgerundeten Ecken aufweisendem Drahtoder Bandmaterial bestehen.

5. Vorrichtung nach einem der Ansprüche 1 bis 4, dadurch gekennzeichnet, daß die Förderwendeln (4, 11, 13, 15) aus federndem und korrosionsbeständigem Material bestehen.

6. Vorrichtung nach Anspruch 5, dadurch gekennzeichnet, daß die Förderwendeln (4, 11, 15) aus Federstahl, Edelstahl, Bronze, federelastischem Kunststoff oder glas- oder kohlefaserverstärktem Material bestehen.

7. Vorrichtung nach einem der Ansprüche 1 bis 6, dadurch gekennzeichnet, daß die biegsame Welle (3) aus Stahl, Edelstahl oder federelastischem Kunststoff besteht.

**Claims**

1. A screw conveyor device for pourable material, with a tubular or hose-like housing (2), which near one end has an feed opening (8) and near to the other end an outlet opening for the conveyed material, with a flexible and rotatable mounted shaft (3) extending through the housing (2), with at least one drivable feed coils (4, 11, 13, 15) surrounding the shaft (3) and consisting of wire or strip material, and with a drive motor (6) connected to one end of the housing for driving the shaft (3) in connection with or relative to the feed coils (4, 11, 13, 15), characterized in that on the flexible shaft (3) at least at its both ends holders (10, 12, 14, 16, 17) consisting of elastic material are arranged as supports for the feed coils (4, 11, 13, 15).

2. A device according to claim 1, characterized in that the flexible shaft (3) is coupled to the drive motor (6) separately from the feed coils (4, 11, 13, 15).

3. A device according to claim 1 or 2, characterized in that a feed coil (4) consisting of wire material is supported without clearance on the flexible shaft (3).

4. A device according to claim 1 or 2, characterized in that the feed coils (4, 11, 13, 15) consist of wire or strip material having circular or rectangular cross-section with rounded corners.

5. A device according to one of the claims 1 to 4, characterized in that the feed coils (4, 11, 13, 15) consist of resilient and corrosion-resistant material.

6. A device according to claim 5, characterized in that the feed coils (4, 11, 3, 15) consist of spring steel, high-grade steel, bronze, resiliently flexible plastics or glass or carbon-fibre reinforced material.

7. A device according to one of the claims 1 to 6, characterized in that the flexible shaft (3) consist of steel, high-grade steel or resiliently flexible plastics material.

**Revendications**

1. Dispositif transporteur à vis pour matériau susceptible de se présenter en vrac, comportant une enveloppe (2) en forme de tuyau rigide ou flexible, qui présente à proximité de la première extrémité un orifice de chargement (8) et à proximité de la seconde extrémité un orifice d'écoulement pour le matériau transporté, un arbre (3) courbable et monté à la rotation, s'étendant à travers l'enveloppe (2), au moins une hélice de transport (4, 11, 13, 15) réalisée en un matériau en fil métallique ou en ruban, susceptible d'être entraînée et entourant l'arbre (3), et un moteur d'entraînement (6) raccordé à la première extrémité de l'enveloppe, pour entraîner l'arbre (3) solidairement avec les hélices de transport (4, 11, 13, 15) ou par rapport à celles-ci, caractérisé en ce que sur l'arbre courbable (3) sont disposés, au moins aux deux extrémités de celui-ci, des supports (10, 12, 14, 16, 17) constitués d'un matériau élastique, en tant qu'appuis pour les hélices de transport (4, 11, 13, 15).

2. Dispositif transporteur selon la revendication 1, caractérisé en ce que l'arbre courbable (3) est accouplé au moteur d'entraînement (6) séparément des hélices de transport (4, 11, 13, 15).

3. Dispositif transporteur selon la revendication 1 ou 2, caractérisé en ce qu'une hélice de transport (6) constituée d'un matériau en fil métallique repose sans jeu sur l'arbre courbable (3).

4. Dispositif transporteur selon la revendication 1 ou 2, caractérisé en ce que les hélices de transport (4, 11, 13, 15) consistent en un matériau en fil métallique ou en bande présentant une section de forme circulaire ou rectangulaire à angles arrondis.

5. Dispositif transporteur selon l'une des revendications 1 à 4, caractérisé en ce que les hélices de transport (4, 11, 13, 15) sont constituées d'un matériau élastique et résistant à la corrosion.

6. Dispositif transporteur selon la revendication 5, caractérisé en ce que les hélices de transport (4, 11, 13, 15) sont constituées d'acier à ressort, d'acier spécial, de bronze, de matière synthétique possédant l'élasticité d'un ressort ou d'un matériau renforcé par des fibres de verre ou de carbone et possédant une telle élasticité.

7. Dispositif transporteur selon l'une quelconque des revendications 1 à 6, caractérisé en ce que l'arbre courbable (3) est constitué d'acier, d'acier spécial ou de matière plastique possédant l'élasticité d'un ressort.

FIG.3

FIG.2

FIG.1

FIG.5

13

14

3

FIG.6

14

16

13

3

15

FIG.4

9

6

5

8

7

14

1

2

13

3

0 187 889

FIG.7

17

19

18

11

3